(19) Europäisches Patentamt
European Patent Office
Office européen des brevets

(11) **EP 2 865 620 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(51) Int Cl.:
*B65G 57/112* (2006.01)    *B65G 57/32* (2006.01)

(21) Anmeldenummer: **14189822.1**

(22) Anmeldetag: **22.10.2014**

(54) **Sortier- und Kommissionieranlage mit Endstelleneinrichtung**

Sorting and commissioning facility with terminal equipment

Installation de tri et de préparation doté d'un dispositif de terminal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2013 DE 102013111788**

(43) Veröffentlichungstag der Anmeldung:
**29.04.2015 Patentblatt 2015/18**

(73) Patentinhaber: **Maschinen- und Stahlbau Julius Lippert GmbH & Co.**
**KG**
**92690 Pressath (DE)**

(72) Erfinder: **Hoch, Günther**
**92637 Weiden (DE)**

(74) Vertreter: **Louis Pöhlau Lohrentz**
**Patentanwälte**
**Postfach 30 55**
**90014 Nürnberg (DE)**

(56) Entgegenhaltungen:
**EP-A1- 2 284 083    WO-A1-99/49277**
**WO-A2-02/26598**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Sortier- und Kommissionieranlage zum Sortieren und Kommissionieren von Warenstücken mit einer Sortiereinrichtung und mindestens einer zugeordneten Endstelleneinrichtung nach dem Oberbegriff des Anspruchs 1, die zum Sortieren und Kommissionieren von Warenstücken vorgesehen ist. Endstelleneinrichtungen sind Einrichtungen, die Warenstücke aufnehmen, die für einen bestimmten Auslieferungsbezirk bestimmt sind und bis zur Verladung der Auslieferung zwischenspeichern.

Es sind Sortiereinrichtungen für Warenstücke nachgeschaltete Endstelleneinrichtungen bekannt, die eine erste Transporteinrichtung und eine unter einem Neigungswinkel geneigte zweite Transporteinrichtung umfassen, wobei auf der zweiten Transporteinrichtung mehrlagige Stapel aus Warenstücken ausgebildet werden. Zwischen der ersten und der zweiten Transporteinrichtung ist ein Höhensprung ausgebildet, dessen Höhe der Höhe der vorletzten Lage des Stapels entspricht. Da die Warenstücke unterschiedliche Abmessungen und Massen aufweisen können, sind Beschädigungen untenliegender Warenstücke durch herabfallende massereiche Warenstücke nicht auszuschließen.

EP2 284 083 offenbart eine Anlage, die dem Oberbegriff des Anspruchs 1 entspricht.

DE 93 00 126 U1 beschreibt eine einer Sortiereinrichtung nachgeschaltete Endstelleneinrichtung, die eine erste Transporteinrichtung, die in einem Neigungswinkel verstellbar ist und eine hinter der ersten Transporteinrichtung angeordnete zweite Transporteinrichtung, die einen konstanten Neigungswinkel aufweist, umfasst. Die erste Transporteinrichtung ist mit der Sortiereinrichtung derartig schwenkbeweglich verbunden, dass die erste Transporteinrichtung zwischen einer flachgeneigten Kommissionierstellung und einer steiler geneigten Übergabestellung verstellbar ist, wobei die erste Transporteinrichtung in der Übergabestellung mit dem zweiten Transportabschnitt fluchtend verbunden ist. Diese Endstelleneinrichtung vermeidet zwar Beschädigungen der Warenstücke, ist jedoch nicht geeignet, Stapel von Warenstücken zu bilden. Aufgabe der vorliegenden Erfindung ist es, eine Sortier- und Kommissionieranlage mit einer verbesserten Endstelleneinrichtung anzugeben, die ein Warenstück schonende Stapelbildung von Warenstücken ermöglicht.

Erfindungsgemäß wird diese Aufgabe mit dem Gegenstand des Anspruchs 1 gelöst.

Die vorgeschlagene Sortier- und Kommissioniereinrichtung weist den Vorteil auf, dass nicht nur einzelne Warenstücke nacheinander schonend auf der zweiten Transporteinrichtung abgelegt werden, sondern dass auch beim Aufbau von Warenstückstapeln die Warenstücke schonend abgelegt werden, weil der Schwenkwinkel der ersten Transporteinrichtung variabel wählbar ist und so an die aktuelle Höhe des Warenstückstapels anpassbar ist. In keinem Fall ist zwischen dem Ausgang der ersten Transporteinrichtung und dem Eingang der zweiten Transporteinrichtung ein Höhensprung ausgebildet, über den das Warenstück stürzen könnte.

Es können auch mehrere Messeinrichtungen vorgesehen sein, die an unterschiedlichen Stellen der mindestens einen Endstelleneinrichtung angeordnet sind.

Die mindestens eine weitere Messeinrichtung kann so ausgebildet sein, dass sie die aktuelle Oberkante des der ersten Transporteinrichtung benachbarten Warenstückstapels und/oder den freien Abstand des auf den Warenstückstapel zuletzt abgelegten Warenstücks zu der Seitenwand der zweiten Transporteinrichtung und/oder die Belegung des Ausgabeabschnitts der zweiten Transporteinrichtung erfasst.

Die weiter oben genannte Messeinrichtung kann stromaufwärts vor der Übergabevorrichtung angeordnet sein. Bei dieser vorteilhaften Ausbildung können die in der Messeinrichtung ermittelten Abmessungen des Warenstücks genutzt werden, um den Zeitpunkt der Betätigung der Übergabevorrichtung variabel festzulegen. Bevorzugt kann sein, den Zeitpunkt so festzulegen, dass ein Betätigungselement der Übergabeeinrichtung etwa in der Mitte des Warenstücks angreift.

Es kann vorgesehen sein, dass die erste Transporteinrichtung und die zweite Transporteinrichtung Transportbahnen aufweisen, wobei die Warenstücke relativ zu den Transportbahnen und/oder mit den Transportbahnen bewegbar sind.

In einer vorteilhaften Ausbildung kann vorgesehen sein, dass die Transportbahn der zweiten Transporteinrichtung schräg nach unten geneigt ist.

Die Transportbahn der ersten Transporteinrichtung und/oder der zweite Transporteinrichtung können als Rollenbahn ausgebildet sein. Es ist aber auch möglich, die Transportbahn als ein Transportband auszubilden.

Es kann vorgesehen sein, dass die Messeinrichtung eine optische Messeinrichtung aufweist, die als eine Lichtschrankeneinrichtung ausgebildet ist, die quer zur Bewegungsbahn des Warenstücks und/oder Warenstückstapels angeordnet ist und so ausgebildet ist, dass sie eine Breite und eine Höhe des Warenstücks und/oder Warenstückstapels erfasst, und die eine Wegmesseinrichtung aufweist, die so ausgebildet ist, dass sie eine längs der Bewegungsbahn des Warenstücks und/oder Warenstückstapels definierte Länge des Warenstücks und/oder Warenstückstapels erfasst. Als zusätzliche Eingangsgröße zur Längenbestimmung des Warenstücks kann vorteilhafterweise die Transportgeschwindigkeit des Warenstücks im Bereich der Wegmesseinrichtung herangezogen werden.

In einer alternativen Ausbildung kann vorgesehen sein, dass die Messeinrichtung als ein Konturenscanner ausgebildet ist.

Es ist auch möglich, dass die Messeinrichtung als eine elektronische Bilderfassungs- und Bildauswertungseinrichtung ausgebildet ist. Zur Bilderfassung können eine oder mehrere elektronische Kameras und eine Auswertungssoftware vorgesehen sein.

Die Messeinrichtung kann weiter eine Wägeeinrichtung umfassen, die so ausgebildet ist, dass sie eine Masse des Warenstücks und/oder Warenstückstapels bestimmt.

Es kann vorgesehen sein, dass die Wägeeinrichtung als eine Strommesseinrichtung ausgebildet ist, welche eine Stromaufnahme eines Antriebsmotors eines Messabschnitts der Sortiereinrichtung bestimmt, wenn auf dem Messabschnitt das Warenstück und/oder der Warenstückstapel angeordnet ist. Dabei kann die aktuelle Leerstromaufnahme des Antriebsmotors unmittelbar nach der Strommessung unter Last bestimmt werden und von der gemessenen Laststromaufnahme abgezogen werden. Damit werden Störeinflüsse, beispielsweise infolge von Verschmutzung von Lagern, Verharzung von Lagerölen und dergleichen eliminiert.

Es kann auch vorgesehen sein, dass die Wägeeinrichtung als eine Waage ausgebildet ist. Die Waage kann beispielsweise als ein Transportabschnitt ausgebildet sein, der auf einem Drucksensor oder mehreren Drucksensoren abgestützt ist.

Die Übergabeeinrichtung kann als ein Schwenkschieber ausgebildet sein. Ein Schwenkschieber weist den Vorteil auf, dass er nur in einer Richtung in 180°-Schritten schwenkbar sein muss und daher eine sehr kurze Reaktionszeit aufweisen kann.

Alternativ kann vorgesehen sein, dass die Übergabeeinrichtung als ein Parallelschieber ausgebildet ist.

Die erste Transporteinrichtung kann als eine schwenkbare Klappe ausgebildet sein. Es ist auch möglich, dass es sich um eine höhenverstellbare Transporteinrichtung handelt, die nach Art eines Aufzugs nach der Aufnahme des Warenstücks eine Auf- oder Abwärtsbewegung ausführt.

Es kann vorgesehen sein, dass an der ersten Transporteinrichtung ein Bügel angeordnet ist, an dem ein bandförmiges Zugelement angreift, das mit einem Kern einer Wickelrolle verbunden ist, die mit einer Abtriebswelle des Antriebsmotors drehstarr verbunden ist. Durch Aufwickeln des Zugelements auf die Wickelrolle wird die erste Transporteinrichtung nach oben geschwenkt. Durch Abwickeln des Zugelements von der Wickelrolle wird die erste Transporteinrichtung nach unten geschwenkt.

An dem stromabseitigen Endabschnitt der ersten Transporteinrichtung kann ein Durchfallsicherungselement angeordnet sein, das einen zwischen der ersten Transporteinrichtung und der zweiten Transporteinrichtung vertikal erstreckten Abstandsraum überdeckt.

Es kann vorgesehen sein, dass das Durchfallsicherungselement als ein plattenförmiges Element ausgebildet ist, beispielsweise als ein Sicherungsblech ausgebildet ist.

Die Erfindung wird nun anhand von Ausführungsbeispielen näher erläutert. Es zeigen

Fig. 1 ein Ausführungsbeispiel einer erfindungsgemäßen Sortier- und Kommissionieranlage mit einer Endstelleneinrichtung in einer perspektivischen Darstellung;

Fig. 2 die Endstelleneinrichtung in Fig. 1 in der Draufsicht;

Fig. 3 eine erste Transporteinrichtung der Endstelleneinrichtung in Fig. 1 in der unteren Endposition;

Fig. 4 die erste Transporteinrichtung in Fig. 3 in einer Zwischenposition;

Fig. 5 die erste Transporteinrichtung in Fig. 3 in der Endposition.

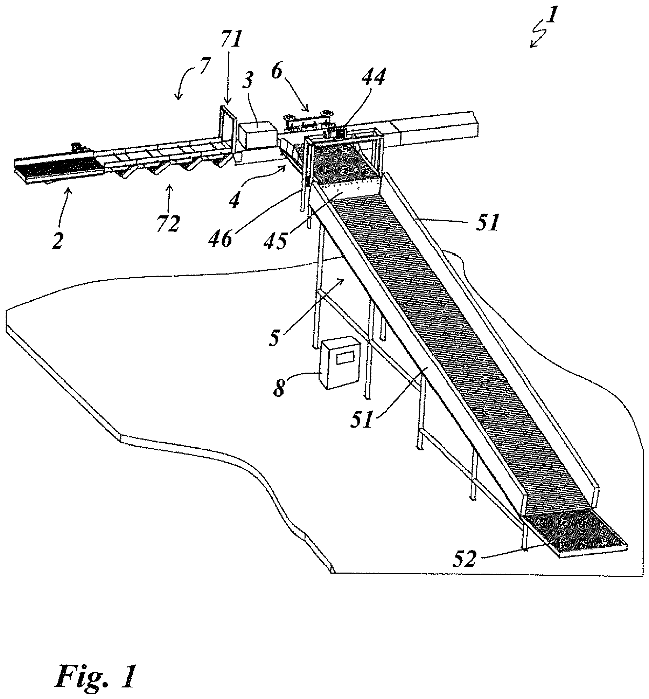

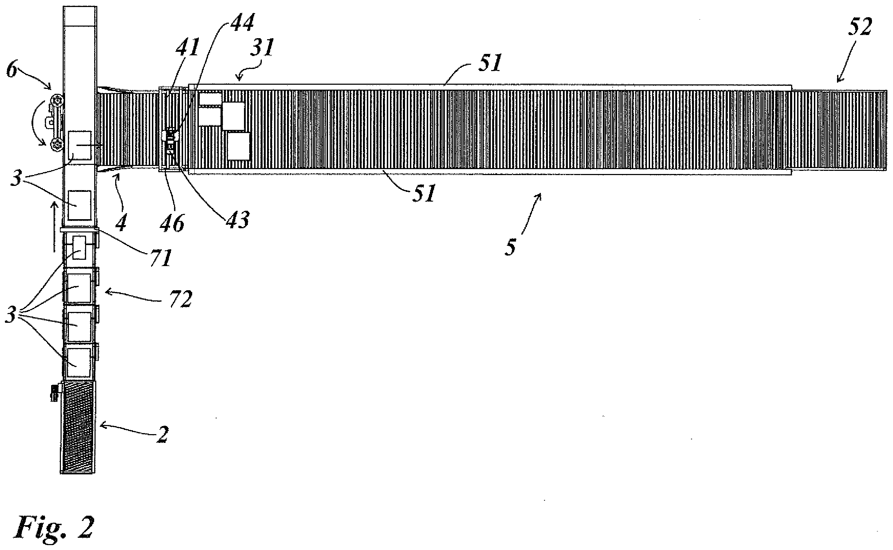

Fig. 1 bis 5 zeigen eine erfindungsgemäße Sortier- und Kommissionieranlage zum Sortieren und Kommissionieren von Warenstücken 3 mit einer Endstelleneinrichtung 1, die an einer Sortiereinrichtung 2 angeordnet ist. An der Sortiereinrichtung 2 sind mehrere Endstelleneinrichtungen 1 angeordnet, die für einen Auslieferungsbezirk bestimmte Warenstücke 3 aufnehmen und bis zur Verladung auf Transportfahrzeuge zwischenspeichern. In dem in Fig. 1 bis 5 dargestellten Ausführungsbeispiel ist nur eine Endstelleneinrichtung dargestellt. Die Endstelleneinrichtung 1 umfasst eine Übergabeeinrichtung 6, eine erste Transporteinrichtung 4, eine zweite Transporteinrichtung 5, eine Messeinrichtung 7 und eine Steuerungseinrichtung 8.

Die Übergabeeinrichtung 6 ist in dem Ausführungsbeispiel als ein Schwenkschieber ausgebildet, der durch eine Schwenkbewegung um 180° ein Warenstück 3 von der Sortiereinrichtung 2 auf die erste Transporteinrichtung 4 verschiebt und dabei die Transportrichtung des Warenstücks 3 um 90° ablenkt. Typischerweise beträgt die Taktzeit für diesen Arbeitsschritt etwa 0,5 s. Es ist auch möglich, die Übergabeeinrichtung 6 als einen Parallelschieber auszubilden.

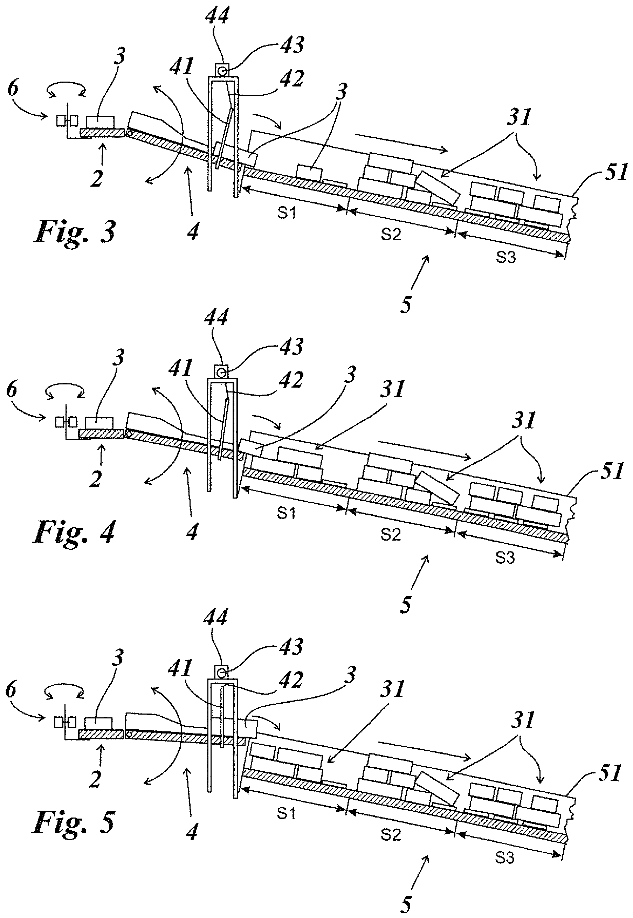

Die erste Transporteinrichtung 4 ist als eine schwenkbare Rollenbahnklappe ausgebildet, die mit der Sortiereinrichtung 2 schwenkbeweglich verbunden ist. An einem Gestell der ersten Transporteinrichtung 4 ist ein an der Transportbahn der Transporteinrichtung angreifender Bügel 41 angeordnet, an dem ein bandförmiges Zugelement 42 angreift, das mit einem Kern einer Wickelrolle 43 verbunden ist, die mit einer Abtriebswelle eines Antriebsmotors 44 drehstarr verbunden ist, wie in Fig. 3 bis 5 schematisch dargestellt. Durch Aufwickeln des Zugelements 42 auf die Wickelrolle 43 wird die erste Transporteinrichtung 4 nach oben geschwenkt. Durch Abwickeln des Zugelements 42 von der Wickelrolle 43 wird die erste Transporteinrichtung 4 nach unten geschwenkt. Der Antriebsmotor 44 ist auf einer als ein bügelförmiges Gestell ausgebildeten Aufnahmeeinrichtung 46 angeordnet, welche die erste Transporteinrichtung 4 in ihrem stromabseitigen Endabschnitt übergreift und an einem Gestell der Endstelleneinrichtung 1 abgestützt ist. An dem stromabseitigen Endabschnitt der ersten Transporteinrichtung 4 ist ein Durchfallsicherungselement 45 angeordnet (siehe Fig. 1), das einen zwischen der ersten Transporteinrichtung 4 und der zweiten Transporteinrichtung 5 vertikal erstreckten Abstandsraum überdeckt. Das Durchfallsicherungselement 42 ist als ein plattenförmiges Element ausgebildet, beispielsweise als ein Sicherungsblech.

In Fig. 3 ist die erste Transporteinrichtung 4 in ihrer untersten Stellung, in der die Ausgangsseite der ersten Transporteinrichtung 4 mit der Eingangsseite der zweiten Transporteinrichtung 5 fluchtet. Warenstücke 3 gleiten so von der ersten Transporteinrichtung 4 auf die zweite Transporteinrichtung 5. Die zweite Transporteinrichtung 5 weist hintereinander angeordnete Stapelabschnitte Si auf, wobei der Index i von 1 bis n läuft, auf denen jeweils Warenstückstapel 31 ausgebildet werden. In dem in Fig. 3 dargestellten Ausführungsbeispiel sind auf den Stapelabschnitten S2 und S3 Warenstückstapel 31 angeordnet, während auf dem unmittelbar auf die erste Transporteinrichtung 4 folgenden Stapelabschnitt S1 eine erste Lage eines neuen Warenstückstapels gebildet wird.

In Fig. 4 ist auf dem Stapelabschnitt S1 die erste Lage des Warenstückstapels 31 ausgebildet und die erste Transporteinrichtung 4 soweit nach oben geschwenkt, dass die Ausgangsseite der ersten Transporteinrichtung 4 mit der Oberkante der ersten Lage des Warenstückstapels 31 fluchtet. Warenstücke 3 gleiten so von der ersten Transporteinrichtung 4 auf die erste Lage des neuen Warenstückstapels 31 und bilden eine zweite Lage des Warenstückstapels 31 aus.

In Fig. 5 ist die erste Transporteinrichtung 4 in ihre obere Endlage geschwenkt, wobei Warenstücke 3 von der ersten Transporteinrichtung 4 auf die zweite Lage des Warenstückstapels 31 gleiten und so eine dritte Lage des Warenstückstapels 31 ausbilden. An beiden Längsseiten der zweiten Transporteinrichtung 5 ausgebildete Seitenwände 51 verhindern, dass Warenstücke 3 von der zweiten Transporteinrichtung 5 herunterfallen. Es kann vorgesehen sein, dass die maximale Höhe des Warenstückstapels 31 so bemessen ist, dass ein in der obersten Lage des Warenstückstapels 31 angeordnetes Warenstück 3 die Seitenwand 51 nicht um mehr als 1/3 der Höhe des Warenstücks 3 überragt.

In dem in Fig. 3 bis 5 dargestellten Ausführungsbeispiel ist vorgesehen, dass ein Warenstückstapel 31 aus drei Lagen von Warenstücken 3 gebildet ist. Sobald der im Stapelabschnitt S1 angeordnete Warenstückstapel 31 vollständig aufgefüllt ist, führt die zweite Transporteinrichtung 5 einen Transportschritt aus, wobei die Weite des Transportschritts der Länge eines Stapelabschnitts Si entspricht, sofern der Ausgabeabschnitt 52 frei ist. Die erste Transporteinrichtung 4 wird in die in Fig. 3 dargestellte unterste Stellung zurück geschwenkt.

Die Messeinrichtung 7 ist stromaufwärts vor der Übergabeeinrichtung 6 angeordnet. Die Messeinrichtung 7 umfasst in dem in Fig. 1 bis 5 dargestellten Ausführungsbeispiel einen Messabschnitt 72 mit einer Lichtschrankeneinrichtung 71, eine Wegmesseinrichtung sowie eine Wägeeinrichtung. Der Messabschnitt 72 ist ein Abschnitt der Sortiereinrichtung 2 und mit einem separaten Antriebsmotor ausgebildet. Diese Einzelheiten sind in Fig. 1 nicht dargestellt.

Die Lichtschrankeneinrichtung 71 ist quer zur Bewegungsbahn des Warenstücks 3 angeordnet und so ausgebildet, dass sie eine Breite B und eine Höhe H des Warenstücks 3 erfasst. Die Lichtschrankeneinrichtung 71 bildet einen Lichtstrahlenvorhang aus, den das Werkstück 3 passiert. Der Lichtstrahlenvorhang ist aus paarweise angeordneten Lichtquellen und

Lichtsensoren ausgebildet, die Zeilen- und spaltenweise angeordnet sind. Beim Durchgang des Warenstücks 3 wird eine der Breite B und der Höhe H des Warenstücks 3 entsprechende Anzahl von horizontalen und vertikalen Lichtstrahlen ausblendet, wodurch die zugeordneten Lichtsensoren abgeschattet werden und ein entsprechendes Low-Signal ausgeben.

Die Wegmesseinrichtung bestimmt eine Zeit t, die das Warenstück 3 benötigt, um den Lichtstrahlenvorhang zu passieren und berechnet aus der Zeit t und einer Transportgeschwindigkeit v des Warenstücks 3 eine Länge L des Warenstücks 3. Die Länge des Warenstücks 3 wird nach der Formel

$$L = v \cdot t$$

bestimmt.

Es kann auch vorgesehen sein, dass die Messeinrichtung 7 als ein Konturenscanner oder als eine elektronische Bilderfassungs- und Bildauswertungseinrichtung ausgebildet ist.

Die Wägeeinrichtung ist in dem dargestellten Ausführungsbeipiel als eine Strommesseinrichtung ausgebildet, welche eine von einer Masse M des Warenstücks 7 abhängige Stromaufnahme I des Antriebsmotors des Messabschnitts 72 der Sortiereinrichtung 2 bestimmt. Die Masse M wird nach der Formel

$$M = k \cdot I$$

bestimmt, wobei k ein durch Versuche bestimmbarer Proportionalitätsfaktor ist.

Es kann auch vorgesehen sein, die Masse des Warenstücks 3 durch eine Wägeeinrichtung zu bestimmen, die in dem Messabschnitt 72 angeordnet ist. Die Wägeeinrichtung kann beispielsweise eine schwenkbare Auflageplatte und einen Drucksensor umfassen.

Es gibt eine weitere Messeinrichtung die die am eingangsseitigen Abschnitt der zweiten Transporteinrichtung 5 angeordnet ist und so ausgebildet ist, dass sie die Oberkante eines auf dem eingangsseitigen Abschnitt der zweiten Transporteinrichtung 5 auszubildenden neuen Warenstückstapels 31 erfasst.

Die Steuerungseinrichtung 8 ist eingangsseitig mit der Messeinrichtung 7 und ggf. mit einer oder mehreren weiteren Messeinrichtungen, und ausgangsseitig mit der Übergabevorrichtung 6, mit dem Antriebsmotor 44 zur Einstellung des Schwenkwinkels der ersten Transporteinrichtung 4 und mit einem Antriebsmotor und/oder einer Bremseinrichtung der zweiten Transporteinrichtung 5 verbunden. die Transporteinrichtung 5 kann beispielsweise als eine Rollenbahn ausgebildet sein, deren Rollen über eine umlaufende Kette angetrieben sind, wobei die Kette durch ein mit dem Abtrieb des Antriebsmotors drehstarr verbundenes Kettenrad angetrieben ist. Bei einer nicht angetriebenen zweiten Transporteinrichtung, bei der die Förderung der Warenstückstapel 31 durch Schwerkraftwirkung erfolgt, kann eine Bremseinrichtung vorgesehen sein, die beispielsweise bei einer Rollenbahn auf mindestens einige der Rollen einwirkt.

Die weiteren Messeinrichtungen können vorgesehen sein, um die aktuelle Oberkante des der ersten Transporteinrichtung 4 benachbarten Warenstückstapels 31 und/oder den freien Abstand des auf den Warenstückstapels 31 zuletzt abgelegten Warenstücks 3 zu der Seitenwand 51 der zweiten Transporteinrichtung 5 und/oder die Belegung des Ausgabeabschnitts 52 der zweiten Transporteinrichtung 5 zu bestimmen.

Die Steuerungseinrichtung 8 weist eine programmierbare Zentraleinheit in Form eines Computers auf, in der ein Steuerungsprogramm abläuft, das beispielsweise die von der Messeinrichtung 7 und ggf. den weiteren Messeinrichtungen ermittelten Messwerte verarbeitet und entsprechende Steuerungssignale an die Komponenten der Endstelleneinrichtung 1 übermittelt.

In der Steuerungseinrichtung 8 werden aus den von der Messeinrichtung 7 ermittelten Messwerten Länge, Breite, Höhe und Masse des Warenstücks 3 berechnet.

Die Steuerungseinrichtung 8 ermittelt nun anhand der Geometrie des Warenstücks 3 den Ausschlusspunkt, das heißt den optimalen Zeitpunkt zur Betätigung der Übergabeeinrichtung 6. Dabei soll der Eingriffsort der Übergabeeinrichtung 6 etwa in der Mitte des Warenstücks 3 liegen. Durch den von der Übergabeeinrichtung 6 auf das Warenstück 3 übertragenen Impuls verläuft die neue Bewegungsbahn des Warenstücks 3 im rechten Winkel zu der auf der Sortiereinrichtung 2 ausgebildeten Bewegungsrichtung des Warenstücks 3. Zur Bestimmung des Ausschlusspunktes kann zusätzlich der freie Abstand des auf den Warenstückstapels 31 zuletzt abgelegten Warenstücks 3 zu der Seitenwand 51 der zweiten Transporteinrichtung 5 herangezogen werden, wie weiter oben beschrieben.

Zur lagenweisen Bildung des in dem ersten Stapelabschnitt S1 angeordneten Warenstückstapels 31 kann eine Verstellung des Neigungswinkels der ersten Transporteinrichtung 4 in festen Schritten vorgesehen sein, beispielsweise in drei Schritten wie in dem in Fig.

3 bis 5 dargestellten Ausführungsbeispiel. Es ist aber auch möglich, durch eine weitere Messeinrichtung die aktuelle Oberkante des Warenstückstapels 31 zu bestimmen und den erforderlichen Neigungswinkel mit Hilfe des Antriebsmotors 44 dementsprechend einzustellen, wie weiter oben beschrieben.

Die vollständige Belegung einer Lage des Warenstückstapels 31 kann durch eine weitere Messeinrichtung beispielsweise nach dem weiter oben beschriebenen Prinzip des Lichtstrahlenvorhangs vorgesehen sein.

Sobald anhand der ausgewerteten Messwerte die vollständige Ausbildung des in dem ersten Stapelabschnitt angeordneten Warenstückstapels 31 ermittelt ist, betätigt die Steuerungseinrichtung 8 den Antriebsmotor der zweiten Transporteinrichtung 5 für die Dauer eines Transportschritts, so dass die Warenstückstapel 31 jeweils in den stromabwärts benachbarten Stapelabschnitt gelangen bzw. der in dem letzten Stapelabschnitt Sn angeordnete Warenstückstapel 31 in den Ausgabeabschnitt 52 gelangt. Zeckmäßigerweise wird die Ausgabe unterbrochen, wenn der Ausgabeabschnitt 52 noch besetzt ist.

Bezugszeichenliste

| | |
|---|---|
| 1 | Endstelleneinrichtung |
| 2 | Sortiereinrichtung |
| 3 | Warenstück |
| 4 | erste Transporteinrichtung |
| 5 | zweite Transporteinrichtung |
| 6 | Übergabeeinrichtung |
| 7 | Messeinrichtung |
| 8 | Steuerungseinrichtung |
| 31 | Warenstückstapel |
| 41 | Bügel |
| 42 | bandförmiges Zugelement |
| 43 | Wickelrolle |
| 44 | Antriebsmotor |
| 45 | Durchfallsicherungselement |
| 46 | Aufnahmeeinrichtung |
| 51 | Seitenwand |
| 52 | Ausgabeabschnitt |
| 71 | Lichtschrankeneinrichtung |
| 72 | Messabschnitt |
| Si | Stapelabschnitt |

**Patentansprüche**

1. Sortier- und Kommissionieranlage zum Sortieren und Kommissionieren von Warenstücken (3) mit einer Sortiereinrichtung (2) und mindestens einer zugeordneten Endstelleneinrichtung (1), wobei vorgesehen ist, dass die mindestens eine Endstelleneinrichtung (1) eine erste Transporteinrichtung (4) und eine an die erste Transporteinrichtung (4) anschließende als Speicherbahn ausgebildete zweite Transporteinrichtung (5) aufweist, und die erste Transporteinrichtung (4) mit der Sortiereinrichtung (2) oder einer an dieser anschließenden Einrichtung schwenkbeweglich verbunden ist und vor der ersten Transporteinrichtung (4) eine Übergabeeinrichtung (6) angeordnet ist, und eine erste Messeinrichtung (7) stromaufwärts vor der Übergabeeinrichtung (6) angeordnet ist, die so ausgebildet ist, dass sie die Abmessungen eines der mindestens einen Endstelleneinrichtung (1) zugeführten Warenstücks (3) erfasst,
**dadurch gekennzeichnet,**

- **dass** mindestens eine weitere Messeinrichtung der zweiten Transporteinrichtung (5) zugeordnet ist und/oder in deren Bereich angeordnet ist, und so ausgebildet ist, dass sie die aktuelle Oberkante des der ersten Transporteinrichtung (4) benachbarten Warenstückstapels (31) und/oder die Oberkante eines auf dem eingangsseitigen Abschnitt der zweiten Transporteinrichtung (5) auszubildenden neuen Warenstückstapels (31) erfasst,
- **dass** die mindestens eine Endstelleneinrichtung (1) weiter eine Steuerungseinrichtung (8) umfasst, die eingangsseitig mit der ersten Messeinrichtung (7) und der mindestens einen weiteren Messeinrichtung verbunden ist und ausgangsseitig mit der Übergabevorrichtung (6), mit einem Antriebsmotor (44) zur Einstellung eines variabel wählbaren Schwenkwinkels der ersten Transporteinrichtung (4) und mit einem Antriebsmotor und/oder einer Bremsvorrichtung der zweiten Transporteinrichtung (5) verbunden ist; und
- **dass** die Steuerungseinrichtung (8) so ausgebildet ist,

**dass** sie den Antriebsmotor (44) der ersten Transporteinrichtung (4) in Abhängigkeit von der Höhe eines auf der zweiten Transporteinrichtung (5) angeordneten Warenstücks (3) und/oder dort angeordneten Warenstückstapels (31) und/oder eines dort zu bildenden Warenstückstapels (31) so steuert, dass der Ausgang der ersten Transporteinrichtung (4) mit dem Eingang der zweiten Transporteinrichtung (5) oder der Oberseite des Warenstücks (3) und/oder Warenstückstapels (31) fluchtet, und
**dass** sie den Antriebsmotor und/oder die Bremsvorrichtung der zweiten Transporteinrichtung (5) so steuert, dass auf der zweiten Transporteinrichtung (5) Warenstückstapel (31) bestimmter Höhe gebildet und/oder transportiert werden.

2. Sortier- und Kommissionieranlage nach Anspruch 1,
**dadurch gekennzeichnet,**
**dass** mehrere Messeinrichtungen vorgesehen sind, die an unterschiedlichen Stellen der mindestens einen Endstelleneinrichtung (1) angeordnet sind.

3. Sortier- und Kommissionieranlage nach Anspruch 1 oder 2,
**dadurch gekennzeichnet,**
**dass** die mindestens eine weitere Messeinrichtung so ausgebildet ist, dass sie den freien Abstand des auf den Warenstückstapel (31) zuletzt abgelegten Warenstücks (3) zu der Seitenwand (51) der zweiten Transporteinrichtung (5) und/oder die Belegung des Ausgabeabschnitts (52) der zweiten Transporteinrichtung (5) erfasst.

4. Sortier- und Kommissionieranlage nach einem der vorangehenden Ansprüche,
**dadurch gekennzeichnet,**
**dass** die erste Transporteinrichtung (4) und die zweite Transporteinrichtung (5) Transportbahnen aufweisen, wobei die Warenstücke (3) relativ zu den Transportbahnen und/oder mit den Transportbahnen bewegbar sind, und vorzugsweise die Transportbahn der zweiten Transporteinrichtung (5) schräg nach unten geneigt ist.

5. Sortier- und Kommissionieranlage nach einem der vorangehenden Ansprüche,
**dadurch gekennzeichnet,**
**dass** die Transportbahn der ersten Transporteinrichtung (4) und/oder der zweite Transporteinrichtung (5) als Rollenbahn ausgebildet ist.

6. Sortier- und Kommissionieranlage nach einem der vorangehenden Ansprüche,
**dadurch gekennzeichnet,**
**dass** die erste Messeinrichtung (7) eine optische Messeinrichtung aufweist, die als eine Lichtschrankeneinrichtung (71) ausgebildet ist, die quer zur Bewegungsbahn des Warenstücks (3) und/oder Warenstückstapels (31) angeordnet ist und so ausgebildet ist, dass sie eine Breite und eine Höhe des Warenstücks (3) und/oder des Warenstückstapels (31) erfasst, und die eine Wegmesseinrichtung aufweist, die so ausgebildet ist, dass sie eine längs der Bewegungsbahn des Warenstücks (3) und/oder Warenstückstapels (31) definierte Länge des Warenstücks (3) und/oder Warenstückstapels (31) erfasst.

7. Sortier- und Kommissionieranlage nach einem der vorangehenden Ansprüche,
**dadurch gekennzeichnet,**
**dass** die erste Messeinrichtung (7) als ein Konturenscanner ausgebildet ist oder als eine elektronische Bilderfassungs- und Bildauswertungseinrichtung ausgebildet ist.

8. Sortier- und Kommissionieranlage nach einem der vorangehenden Ansprüche,

**dadurch gekennzeichnet,**
**dass** die erste Messeinrichtung (7) weiter eine Wägeeinrichtung umfasst, die so ausgebildet ist, dass sie eine Masse des Warenstücks (3) und/oder Warenstückstapels (31) bestimmt, wobei vorzugsweise die Wägeeinrichtung als eine Waage ausgebildet ist.

9. Sortier- und Kommissionieranlage nach Anspruch 8,
**dadurch gekennzeichnet,**
**dass** die Wägeeinrichtung als eine Strommesseinrichtung ausgebildet ist, welche eine Stromaufnahme eines Antriebsmotors eines Messabschnitts (72) der Sortiereinrichtung (2) bestimmt, wenn auf dem Messabschnitt (72) das Warenstück (3) und/oder der Warenstückstapel (31) angeordnet ist.

10. Sortier- und Kommissionieranlage nach einem der vorangehenden Ansprüche,
**dadurch gekennzeichnet,**
**dass** die Übergabeeinrichtung (6) als ein Schwenkschieber oder als ein Parallelschieber ausgebildet ist.

11. Sortier- und Kommissionieranlage nach einem der vorangehenden Ansprüche,
**dadurch gekennzeichnet,**
**dass** die erste Transporteinrichtung (4) als eine schwenkbare Klappe ausgebildet ist.

12. Sortier- und Kommissionieranlage nach einem der vorangehenden Ansprüche,
**dadurch gekennzeichnet,**
**dass** an der ersten Transporteinrichtung (4) ein Bügel (41) angeordnet ist, an dem ein bandförmiges Zugelement (42) angreift, das mit einem Kern einer Wickelrolle (43) verbunden ist, die mit einer Abtriebswelle des Antriebsmotors (44) drehstarr verbunden ist.

13. Sortier- und Kommissionieranlage nach einem der vorangehenden Ansprüche,
**dadurch gekennzeichnet,**
**dass** an dem stromabseitigen Endabschnitt der ersten Transporteinrichtung (4) ein Durchfallsicherungselement (42) angeordnet ist, das einen zwischen der ersten Transporteinrichtung (4) und der zweiten Transporteinrichtung (5) vertikal erstreckten Abstandsraum überdeckt, wobei vorzugsweise das Durchfallsicherungselement (42) als ein plattenförmiges Element ausgebildet ist.

**Claims**

1. Sorting and picking system for sorting and picking goods (3) having a sorting device (2) and at least one associated terminal device (1), wherein it is provided that the at least one terminal device (1) has a first transportation device (4) and a second transportation device (5) connecting to the first transportation device (4) and formed as a storage conveyor, and the first transportation device (4) is connected to the sorting device (2) or a device connected to this in such a way that it is able to be swivelled and a transfer device (6) is arranged in front of the first transportation device (4), and a first measuring device (7) is arranged upstream in front of the transfer device (6), the measuring device being formed in such a way that it records the dimensions of an item (3) supplied to the at least one terminal device (1), **characterised in that**

   - at least one further measuring device is allocated to the second transportation device (5) and/or is arranged in the region thereof, and is formed in such a way that it records the current top edge of the pile of goods (31) adjacent to the first transportation device (4) and/or the top edge of a new pile of goods (31) to be formed on the input-side section of the second transportation device (5),
   - the at least one terminal device (1) further comprises a control device (8) which is connected on the input side to the first measuring device (7) and to the at least one further measuring device and is connected on the output side to the transfer device (6), to a drive motor (44) for adjusting a variably selectable swivelling angle of the first transportation device (4) and to a drive motor and/or a brake device of the second transportation device (5); and
   - the control device (8) is formed in such a way that it controls the drive motor (44) of the first transportation device (4) depending on the height of an item (3) arranged on the second transportation device (5) and/or a pile of goods (31) arranged there and/or a pile of goods (31) to be formed there in such a way that the output of the first transportation device (4) aligns with the input of the second transportation device (5) or the top of the item (3) and/or the pile of goods (31), and that it controls the drive motor and/or the brake device of the second transportation device (5) in such a way that piles of goods (31) of a certain height are formed and/or transported on the second transportation device (5).

2. Sorting and picking system according to claim 1, **characterised in that**
   several measuring devices are provided, which are arranged at different points of the at least one terminal device (1).

3. Sorting and picking system according to claim 1 or 2, **characterised in that**
   the at least one further measuring device is formed in such a way that it records the free distance between the item (3) last placed on the pile of goods (31) and the side wall (51) of the second transportation device (5) and/or the occupancy of the output section (52) of the second transportation device (5).

4. Sorting and picking system according to one of the preceding claims,
**characterised in that**
the first transportation device (4) and the second transportation device (5) have conveyor tracks, wherein the goods (3) are able to be moved relative to the conveyor tracks and/or with the conveyor tracks, and the conveyor track of the second transportation device (5) is preferably inclined to slope downwards.

5. Sorting and picking system according to one of the preceding claims,
**characterised in that**
the conveyor track of the first transportation device (4) and/or of the second transportation device (5) is formed as a roller track.

6. Sorting and picking system according to one of the preceding claims,
**characterised in that**
the first measuring device (7) has an optical measuring device which is formed as a light barrier device (71) which is arranged transversely to the path of motion of the item (3) and/or pile of goods (31) and is formed in such a way that it records a width and a height of the item (3) and/or of the pile of goods (31), and has one path measuring device which is formed in such a way that it records a length of the item (3) and/or the pile of goods (31) defined along the path of motion of the item (3) and/or pile of goods (31).

7. Sorting and picking system according to one of the preceding claims,
**characterised in that**
the first measuring device (7) is formed as a shape scanner or as an electronic image recording and image evaluation device.

8. Sorting and picking system according to one of the preceding claims,
**characterised in that**
the first measuring device (7) further comprises a weighing device which is formed in such a way that it determines a mass of the item (3) and/or pile of goods (31), wherein the weighing device is preferably formed as scales.

9. Sorting and picking system according to claim 8,
**characterised in that**
the weighing device is formed as a current measuring device which determines a current consumption of a drive motor of a measuring section (72) of the sorting device (2) when the item (3) and/or pile of goods (31) is arranged on the measuring section (72).

10. Sorting or picking system according to one of the preceding claims,
**characterised in that**
the transfer device (6) is formed as a swivel pusher or as a parallel pusher.

11. Sorting and picking system according to one of the preceding claims,
**characterised in that**
the first transportation device (4) is formed as a flap which is able to be swivelled.

12. Sorting and picking system according to one of the preceding claims,
**characterised in that**
a strap (41) is arranged on the first transportation device (4), a ribbon-like tension element (42) acting on said strap, the ribbon-like tension element (42) is connected to a core of a winding roller (43) which is connected torsionally rigidly to a drive shaft of the drive motor (44).

13. Sorting and picking system according to one of the preceding claims,
**characterised in that**
a fall-through protection element (42) is arranged on the downstream-side end section of the first transportation device (4), the fall-through protection element covering a distance space extending vertically between the first transportation device (4) and the second transportation device (5), wherein the fall-through protection element (42) is preferably formed as a plate-shaped element.

**Revendications**

1. Installation de tri et de préparation de commande pour le tri et la préparation de commande d'articles (3) avec un dispositif de tri (2) et au moins un dispositif terminal (1), moyennant quoi il est prévu que l'au moins un dispositif terminal (1) comprenne un premier dispositif de transport (4) et un deuxième dispositif de transport (5) prolongeant le premier dispositif de transport (4) et conçu comme une ligne d'entreposage, et le premier dispositif de transport (4) est relié de manière pivotante avec le dispositif de tri (2) ou à un dispositif prolongeant celui-ci et, avant le premier dispositif de transport (4), est disposée un dispositif de transfert (6) et un premier dispositif de mesure (7) est disposé en amont avant le dispositif de transfert (6), qui est conçu de façon à mesurer les dimensions d'un des articles (3) introduit dans l'au moins un dispositif terminal (1),
**caractérisé en ce que**

- au moins un autre dispositif de mesure est attribué au deuxième dispositif de transport (5) et/ou est disposé à son niveau et est conçu de façon à mesurer l'arête supérieure actuelle de la première pile d'articles (31) adjacente au premier dispositif de transport (4) et/ou l'arête supérieure d'une nouvelle pile d'articles (31) à former sur la portion côté entrée du deuxième dispositif de transport (5),

- l'au moins un dispositif terminal (1) comprend en outre un dispositif de commande (8) qui est reliée, du côté de l'entrée, avec le premier dispositif de mesure (7) et avec l'au moins un autre dispositif de mesure et, du côté de la sortie, avec le dispositif de transfert (6), avec un moteur d'entraînement (44) pour le réglage d'un angle de pivotement variable du premier dispositif de transport (4) et avec un moteur d'entraînement et/ou un dispositif de freinage du deuxième dispositif de transport (5) ; et

- le dispositif de commande (8) est conçu de façon à commander le moteur d'entraînement (44) du premier dispositif de transport (4) en fonction de la hauteur d'un article (3) disposé sur le deuxième dispositif de transport (5) et/ou de la pile d'articles (31) se trouvant à cet endroit et/ou d'une pile d'articles (31) à former à cet endroit, de façon à ce que la sortie du premier dispositif de transport (4) soit alignée avec l'entrée du deuxième dispositif de transport (5) ou le côté supérieur de l'article (3) et/ou de la pile d'articles (31) et de façon à commander le moteur d'entraînement et/ou le dispositif de freinage du deuxième dispositif de transport (5) de façon à ce que, sur le deuxième dispositif de transport (5), des piles d'articles (31) d'une hauteur déterminée soient formées et/ou transportées.

2. Installation de tri et de préparation de commande selon la revendication 1,
**caractérisée en ce que**
plusieurs dispositifs de mesure sont prévus, qui sont disposés à différents endroits de l'au moins un dispositif terminal (1).

3. Installation de tri et de préparation de commande selon la revendication 1 ou 2,
**caractérisée en ce que**
l'au moins un autre dispositif de mesure est conçu de façon à mesurer la distance libre entre l'article (3) déposé en dernier sur la pile d'articles (31) et la paroi latérale (51) du deuxième dispositif de transport (5) et/ou l'occupation de la portion de sortie (52) du deuxième dispositif de transport (5).

4. Installation de tri et de préparation de commande selon l'une des revendications précédentes,
**caractérisée en ce que**
le premier dispositif de transport (4) et le deuxième dispositif de transport (5) comprennent des lignes de transport, les articles (3) pouvant être déplacés par rapport aux lignes de transport et/ou avec les lignes de transport et, de préférence, la ligne de transport du deuxième dispositif de transport (5) est inclinée de manière oblique vers le bas.

5. Installation de tri et de préparation de commande selon l'une des revendications précédentes,
**caractérisée en ce que**
la ligne de transport du première dispositif de transport (4) et/ou du deuxième dispositif de transport (5) est conçue comme un convoyeur à rouleaux.

6. Installation de tri et de préparation de commande selon l'une des revendications précédentes,
**caractérisée en ce que**
le premier dispositif de mesure (7) comprend un dispositif de mesure optique qui est conçu comme un dispositif de barrière photo-électrique (71), qui est disposé transversalement par rapport à la ligne de déplacement de l'article (3) et/ou de la pile d'articles (31) et conçu pour mesurer une largeur et une hauteur de l'article (3) et/ou de la pile d'articles (31) et qui comprend un dispositif de mesure de trajet qui est conçu pour mesurer une longueur de l'article (3) et/ou de la pile d'articles (31) définie le long de la ligne de déplacement de l'article (3) et/ou de la pile d'articles (31).

7. Installation de tri et de préparation de commande selon l'une des revendications précédentes,
**caractérisée en ce que**
le premier dispositif de mesure (7) est conçu comme un scanner de contour ou est conçu comme un dispositif électronique de capture et d'analyse d'images.

8. Installation de tri et de préparation de commande selon l'une des revendications précédentes,
**caractérisée en ce que**
le premier dispositif de mesure (7) comprend un dispositif de pesage conçu pour déterminer une masse de l'article (3) et/ou de la pile d'articles (31), le dispositif de pesage étant conçu de préférence comme une balance.

9. Installation de tri et de préparation de commande selon la revendication 8,
**caractérisée en ce que**
le dispositif de pesage est conçu comme un dispositif de mesure de courant qui détermine une consommation de courant d'un moteur d'entraînement d'une portion de mesure (72) du dispositif de tri (2), lorsque l'article (3) et/ou la pile d'articles (31) est disposé sur la portion de mesure (72).

**10.** Installation de tri et de préparation de commande selon l'une des revendications précédentes, **caractérisée en ce que** le dispositif de transfert (6) est conçu comme un guidon pivotant ou un guidon parallèle.

**11.** Installation de tri et de préparation de commande selon l'une des revendications précédentes, **caractérisée en ce que** le premier dispositif de transport (4) est conçu comme un clapet pivotant.

**12.** Installation de tri et de préparation de commande selon l'une des revendications précédentes, **caractérisée en ce que** sur le premier dispositif de transport (4) se trouve un étrier (41), au niveau duquel s'emboîte un élément de traction en forme de bande (42) qui est relié avec un noyau d'un rouleau d'enroulement (43) qui est relié de manière solidaire en rotation avec un arbre d'entraînement du moteur d'entraînement (44).

**13.** Installation de tri et de préparation de commande selon l'une des revendications précédentes, **caractérisée en ce que** au niveau de portion d'extrémité du côté aval du premier dispositif de transport (4), se trouve un élément de protection anti-chute (42) qui recouvre un espace intermédiaire s'étendant verticalement entre le premier dispositif de transport (4) et le deuxième dispositif de transport (5), de préférence l'élément de protection anti-chute (42) étant conçu comme un élément en forme de plaque.

**Fig. 1**

*Fig. 2*

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2284083 A
- DE 9300126 U1